# FASCICULE DE BREVET EUROPEEN

(11) **EP 0 362 023 B1**
(45) Date de publication et mention de la délivrance du brevet: **07.01.1993**
(21) Numéro de dépôt: 89402572.5
(22) Date de dépôt: 20.09.1989
(51) Int. Cl.: B01D 53/14, C07C 7/11

(54) **Procédé de déshydratation, de désacidification et de séparation d'un condensat d'un gaz naturel**
Verfahren zur Entwässerung, Entsäuerung und zur Abtrennung eines Kondensates von einem Erdgas
Process of dehydration, of deacification and of separation of a condensate from a natural gas

(30) Priorité: 26.09.1988 FR 8812642
(43) Date de publication de la demande: 04.04.1990
(73) Titulaire: INSTITUT FRANCAIS DU PETROLE, 92502 Rueil-Malmaison (FR)
(72) Inventeur: Rojey, Alexandre, F-92380 Garches (FR); Pucci, Annick, F-78290 Croissy Sur Seine (FR); Larue, Joseph, F-78240 Chambourcy (FR)

(56) Documents cités:
- EP-A- 0 267 819
- EP-A-20 062 789
- FR-A- 2 550 956
- US-A- 4 235 613

## Description

La présente invention a pour but de réaliser les différentes étapes de traitement d'un gaz naturel : déshydratation, séparation des hydrocarbures condensables (par ex. ceux qui comprennent au moins deux ou au moins trois atomes de carbone ou plus) et désacidification, dans un même procédé intégré.

Dans FR-A-2605 241, il est déjà décrit un procédé de traitement faisant appel à un solvant physique réfrigéré et permettant de réaliser l'ensemble des opérations de déshydratation, séparation des hydrocarbures supérieurs et désacidification.

Ce procédé présente des avantages importants par rapport aux techniques antérieures. En particulier la séparation de l'eau et du solvant par contact avec le gaz à traiter permet d'éviter d'avoir à réaliser cette séparation par distillation.

Il présente néanmoins certains inconvénients :
La séparation entre le méthane et les hydrocarbures tels que le propane et les hydrocarbures dont les molécules comportent plus de trois atomes de carbone est incomplète, alors qu'il est souhaitable que cette séparation soit la plus complète possible.

D'autre part, l'étape d'absorption des gaz acides conduit à une absorption dans le solvant, non seulement des gaz acides, mais aussi d'une fraction d'hydrocarbures. Ces hydrocarbures peuvent se retrouver avec les gaz acides à l'issue de l'étape de régénération du solvant, ce qui est défavorable, d'une part en raison des pertes en hydrocarbures ainsi entraînés, et d'autre part, lorsque de l'hydrogène sulfuré est présent, du fait que la présence d'hydrocarbures rend difficile l'élimination de ce sulfure d'hydrogène par réaction Claus.

Le procédé selon l'invention vise à résoudre ces difficultés. Selon ce procédé :
a) On contacte ledit gaz avec une phase liquide recyclée renfermant à la fois de l'eau et un solvant, ledit solvant étant un composé organique non-hydrocarbure, normalement liquide, autre que l'eau, ledit composé étant au moins partiellement miscible à l'eau et distillable à une température inférieure à celle de distillation de l'eau, de manière à obtenir une phase liquide aqueuse appauvrie en solvant, par comparaison avec ladite phase liquide recyclée, et une phase gazeuse chargée de solvant.
b) On refroidit la phase gazeuse provenant de l'étape (a), de manière à la condenser partiellement, le condensat obtenu comprenant une phase aqueuse et une phase d'hydrocarbure, et on sépare le condensat du gaz non condensé.
c) On rectifie le gaz non-condensé en le faisant circuler dans une direction ascendante et en le refroidissant pour le condenser partiellement, en faisant s'écouler le liquide condensé résultant dans une direction descendante en contact à contre-courant avec le gaz ascendant et en recueillant après ledit contact une phase gazeuse non-condensée et un mélange dudit liquide condensé avec le condensat de l'étape (b), ledit mélange comprenant une phase liquide aqueuse et une phase liquide d'hydrocarbure.
d) On sépare par décantation la phase liquide aqueuse de la phase liquide d'hydrocarbure, obtenues à l'étape (c), on soutire la phase d'hydrocarbure et on recycle la phase aqueuse à l'étape (a).
e) On contacte la phase gazeuse non-condensée, provenant de l'étape (c), avec une phase solvant régénérée provenant de l'étape (f), de manière à dissoudre dans ladite phase solvant au moins une partie du gaz acide présent dans ladite phase gazeuse non-condensée, et on recueille une phase gazeuse désacidifiée et une phase solvant chargée en gaz acide.
(f) On libère par détente et/ou chauffage au moins une partie du gaz acide de la phase solvant recueillie à l'étape (e) et on renvoie la phase solvant régénérée résultante à l'étape (e).

Par composé "normalement liquide" on entend "liquide dans les conditions normales de température et de pression".

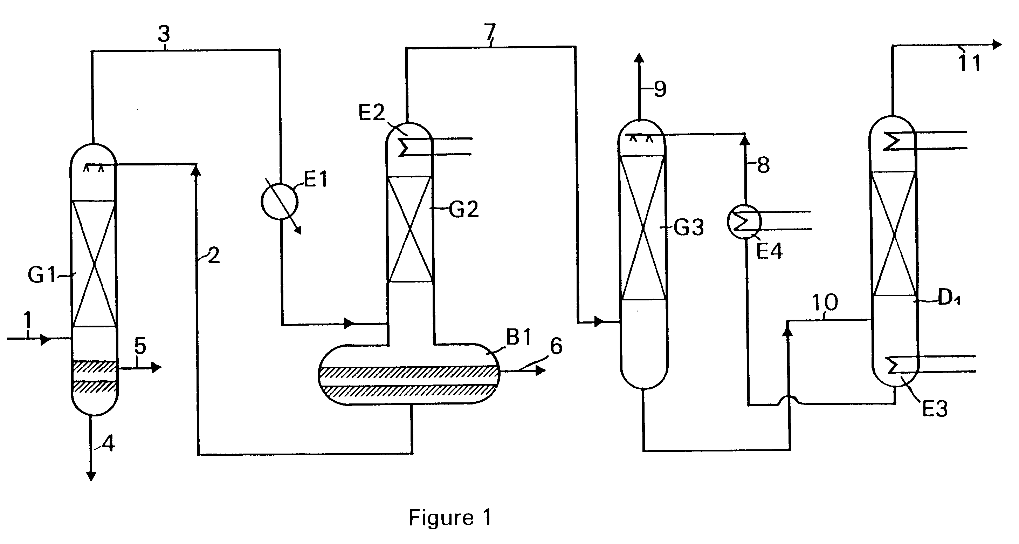

Les Figures 1 à 9 illustrent divers modes de mise en oeuvre de l'invention.

Le gaz naturel à traiter, renfermant du méthane, de l'eau, des gaz acides et au moins un hydrocarbure condensable arrive par le conduit 1 (Figure 1). Il est mis en contact, dans la zone de contact G1, avec un mélange de solvant et d'eau provenant du conduit 2. On évacue en tête, par le conduit 3, une phase gazeuse chargée de solvant. En fond, on soutire par le conduit 4 une phase aqueuse substantiellement débarrassée de solvant. Si une phase hydrocarbure s'est condensée, elle est séparée par décantation et évacuée par le conduit 5. La phase gazeuse de tête est refroidie partiellement dans l'échangeur E1 de manière à provoquer une condensation partielle. La phase gazeuse résultante est mise en contact ascendant dans la zone de contact G2 avec le condensat descendant formé au contact du circuit réfrigérant E2 disposé au-dessus de G2. Deux phases se séparent dans le bac de décantation B1. Ces phases résultent des condensations effectuées dans E1 et dans E2 et du contact dans G2. La phase hydrocarbure, formée essentiellement des hydrocarbures condensables du gaz naturel (C3⁺ ou éventuellement C2⁺) est évacuée par la ligne 6. La phase aqueuse formée essentiellement d'eau et de solvant est renvoyée par la ligne 2 à la zone de contact G1. Le gaz, largement débarrassé d'hydrocarbures condensables mais qui renferme encore une proportion notable de gaz acides, est envoyé par la ligne 7 à la zone de contact G3 où il rencontre à contre-courant une phase solvant régénérée arrivant par la ligne 8 et refroidie dans l'échangeur E4 par un fluide de réfrigération externe. Le gaz traité, largement débarrassé des gaz acides, est évacué par la ligne 9. La phase solvant est envoyée par la ligne 10 à la zone de distillation ou strippage D1. Pour favoriser la vaporisation des gaz acides, évacués par la ligne 11, on soumet la phase solvant à un chauffage ou à une détente dans la zone D1 (Ici on a représenté un chauffage E3) ; le solvant régénéré est renvoyé à travers l'échangeur E4 à la zone de contact G3 par le conduit 8.

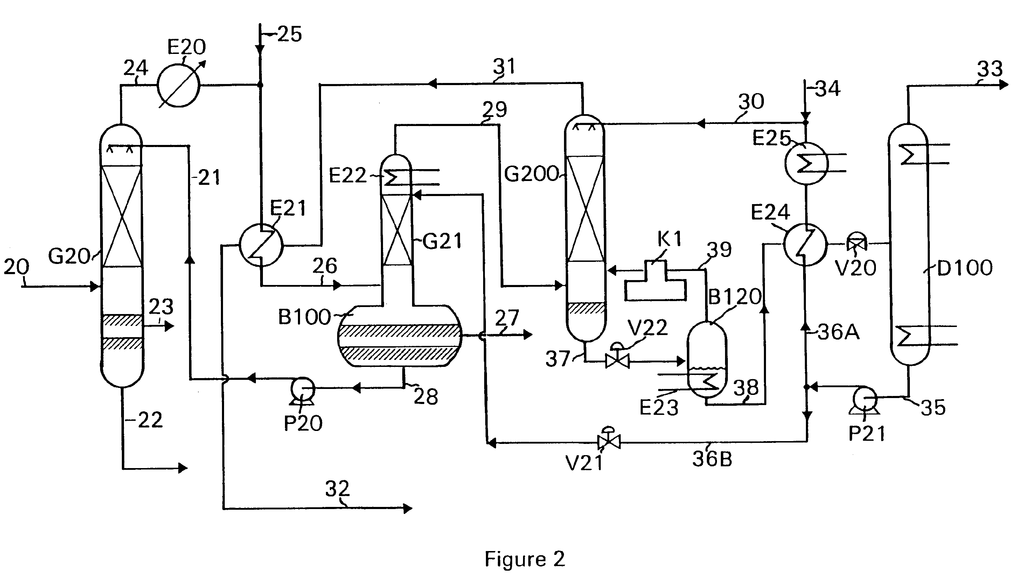

La Figure 2 représente un autre exemple de réalisation.

Le gaz à traiter arrive par le conduit 20. Il est mis en contact dans la zone de contact G20 avec un mélange de solvant et d'eau arrivant par le conduit 21.

A la sortie de la zone de contact G20 on évacue par le conduit 22 une phase aqueuse substantiellement débarrassée de solvant. Si une phase hydrocarbure liquide est présente elle est séparée par décantation et évacuée par le conduit 23. En tête de la zone de contact G20, on évacue par le conduit 24 une phase gazeuse chargée en solvant. Cette phase gazeuse est refroidie dans l'échangeur E20 par un fluide de refroidissement extérieur, eau ou air disponible. Elle peut si nécessaire être ensuite mélangée avec un appoint de solvant arrivant par le conduit 25, pour compenser les pertes éventuelles. Le mélange résultant est refroidi davantage dans l'échangeur E21 d'où il ressort par la conduit 26. Il est alors mis en contact dans la zone de contact G21 avec un mélange de deux phases liquides dont l'une est formée essentiellement d'hydrocarbures et l'autre est une phase aqueuse. L'origine de ces phases est expliquée plus loin . La phase gazeuse sortant de la zone de contact G21 est refroidie à nouveau dans la zone de refroidissement E22 à l'aide d'un réfrigérant extérieur. Cette réfrigération produit la formation de deux phases liquides, dont l'une est formée essentiellement d'hydrocarbures et l'autre est une phase aqueuse, qui sont envoyées à la zone de contact G21. L'opération de contact réalisée dans la zone de contact G21 permet de réduire la quantité de propane et d'hydrocarbures dont les molécules comportent plus de trois atomes de carbone dans le gaz sortant de la zone de contact G21 et de réduire la quantité de méthane dans la phase liquide formée essentiellement d'hydrocarbures ; elle permet également d'entraîner dans le gaz une partie du solvant contenu dans la phase aqueuse ainsi que dans la phase hydrocarbure.

Les deux phases liquides sortant de la zone de contact G21 sont séparées par décantation dans le bac de décantation B100. La phase hydrocarbure est évacuée par le conduit 27. La phase aqueuse formée essentiellement d'un mélange d'eau et de solvant est évacuée par le conduit 28. Elle est alors reprise par la pompe P20 et recyclée par le conduit 21 à la zone de contact G20.

Le débit d'appoint de solvant arrivant par le conduit 25 est régulé de manière à obtenir une concentration en solvant dans la phase aqueuse fixée de manière à éviter tout risque de formation d'hydrates. La concentration en solvant dans ladite phase aqueuse est de préférence comprise entre 20 et 60 %.

L'opération de contact entre le gaz et les deux phases liquides obtenues par réfrigération permet ainsi d'améliorer la séparation entre le méthane et les hydrocarbures tels que le propane et les hydrocarbures dont les molécules comportent plus de trois atomes de carbone.

La phase gazeuse obtenue après refroidissement dans la zone de réfrigération E22 et séparation des phases liquides qui sont envoyées dans la zone de contact G21 est envoyée par le conduit 29 à la zone de contact G200.

Dans la zone de contact G200, la phase gazeuse arrivant par le conduit 29 est contactée avec une phase solvant arrivant par le conduit 30. Cette phase solvant contient une concentration en eau de préférence comprise entre 5 et 50 %.

La présence d'eau dans la phase solvant permet de limiter l'absorption d'hydrocarbures et ainsi de réduire la quantité d'hydrocarbures présents avec les gaz acides à l'issue de l'étape de régénération du solvant.

Le gaz traité débarrassé d'au moins une partie des gaz acides est évacué par le conduit 31 et passe dans l'échangeur E21, dans lequel il s'échauffe en refroidissant le gaz qui est envoyé à la zone de contact G21. Il sort de l'échangeur E21 par le conduit 32 et il est évacué.

La phase solvant qui est évacuée de la zone de contact G200 par le conduit 37 est détendue dans la vanne V22 et chauffée dans le ballon B120 par l'échangeur de chaleur E23 ; le gaz formé est évacué par le conduit 39, recomprimé par le compresseur K1 et renvoyé dans la zone de contact G200 ; le liquide est évacué par le conduit 38, réchauffé dans l'échangeur de chaleur E24, détendu dans la vanne V20, et envoyé dans la zone de distillation D100. La phase solvant régénérée est évacuée par le conduit 35, reprise par la pompe P21 et envoyée par le conduit 36A dans l'échangeur de chaleur E24 dans lequel elle se refroidit par échange thermique avec le liquide provenant du ballon B120.

La phase solvant sortant de l'échangeur E24 est refroidie par un réfrigérant extérieur dans l'échangeur E25 et elle est recyclée par le conduit 30 à la zone de contact G200.

L'étape (e) de désacidification est réalisée à une température moyenne de préférence au plus égale à la température moyenne de l'étape (c), de manière à bénéficier d'un pouvoir solvant et d'une sélectivité accrus de la phase solvant, mais de préférence voisine, l'écart entre la température moyenne de l'étape (e) et la température moyenne de l'étape (c) étant de préférence au plus égal à 20 °C.

Les gaz acides sortant de la zone de distillation D100 sont évacués par le conduit 33.

La teneur en eau de la phase solvant arrivant par le conduit 30 étant normalement inférieure à la teneur en eau de la phase solvant en équilibre avec le gaz arrivant par le conduit 29 dans la zone de contact G200, la teneur en solvant du gaz sortant de la zone de contact G200 par le conduit 31 est normalement supérieure à la teneur en solvant du gaz entrant par le conduit 29 dans la zone de contact G200. Cette perte de solvant peut être compensée par un débit d'appoint de solvant arrivant par le conduit 34 et régulé de manière à maintenir fixée la composition de la phase solvant envoyée à la zone de contact G200.

De la même façon, la teneur en eau du gaz sortant de la zone de contact G200 par le conduit 31 est normalement inférieure à la teneur en eau du gaz entrant par le conduit 29 dans la zone de contact G200. Pour éviter une accumulation d'eau dans le circuit de circulation de la phase solvant envoyée à la zone de contact G200, on évacue par le conduit 36B un débit de purge qui peut être renvoyé à la partie supérieure de la zone de contact G21. Ce débit de purge est contrôlé par la vanne V21 qui est régulée de manière à maintenir sensiblement constantes les quantités de solvant et d'eau présentes dans le circuit de circulation de la phase solvant envoyée à la zone de contact G200, par exemple en contrôlant un niveau de distillation dans la zone de distillation D100.

Le solvant utilisé doit être au moins partiellement miscible avec l'eau. De préférence, il doit avoir une température d'ébullition inférieure à celle de l'eau ou former avec l'eau un azéotrope dont la température d'ébullition est inférieure à celle de l'eau, de manière à pouvoir être entraîné par le gaz au cours de l'étape (a) du procédé.

Ce solvant peut être par exemple le méthanol. Il peut être également choisi par exemple parmi les solvants suivants : méthylpropyléther, éthylpropyléther, dipropyléther, méthyltertiobutyléther, diméthoxyméthane, diméthoxyéthane, éthanol, méthoxyéthanol, propanol.

La phase liquide formée essentiellement d'hydrocarbures recueillie dans le bac de décantation B100 contient du solvant.

Pour éliminer au moins en partie le solvant qu'elle contient, il est possible de la contacter avec une phase aqueuse débarrassée de solvant, en prélevant une fraction de la phase aqueuse évacuée par le conduit 22.

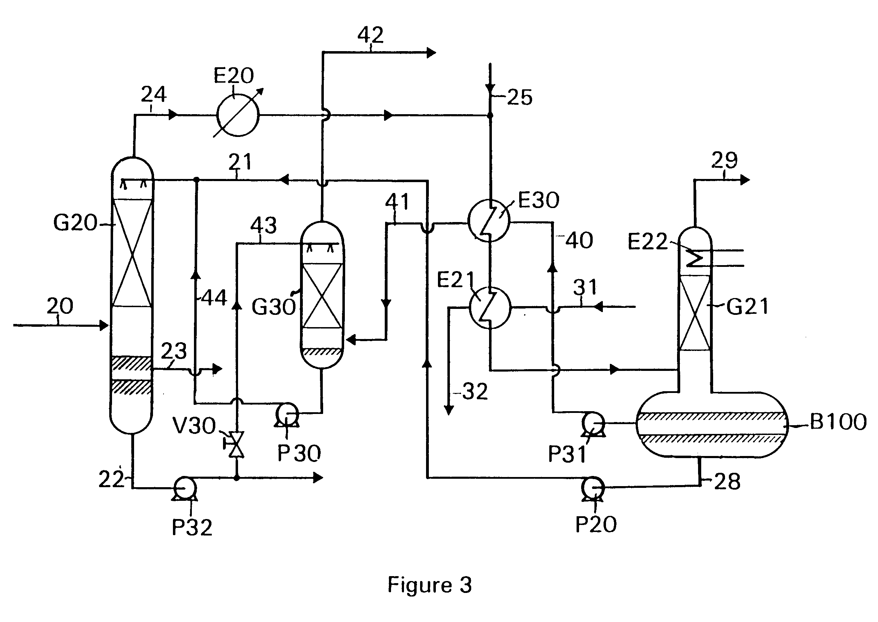

On peut opérer par exemple selon le schéma représenté sur la figure 3.

Sur cette figure les équipements qui sont les mêmes que ceux qui sont représentés sur le schéma de la figure 2 sont désignés par les mêmes notations.

La phase hydrocarbure qui est recueillie dans le bac de décantation B100 est prélevée par la pompe P31 et envoyée par le conduit 40 dans l'échangeur E30 dans lequel elle est réchauffée par échange de chaleur avec le gaz traité. Elle est alors envoyée par le conduit 41 à la zone de contact G30. La phase aqueuse qui est évacuée à la sortie de la zone de contact G20 par le conduit 22 est reprise par la pompe P32 et une fraction de cette phase aqueuse, dont le débit est contrôlé par la vanne V30, est envoyée par le conduit 43 à la zone de contact G30.

La phase hydrocarbure, débarrassée de la majeure partie du solvant qu'elle contenait à l'entrée de la zone de contact G30 est évacuée par le conduit 42. La phase aqueuse contenant du solvant sortant de la zone de contact G30 est évacuée par la pompe P30 et envoyée par le conduit 44 se mélanger avec la phase aqueuse arrivant par le conduit 21.

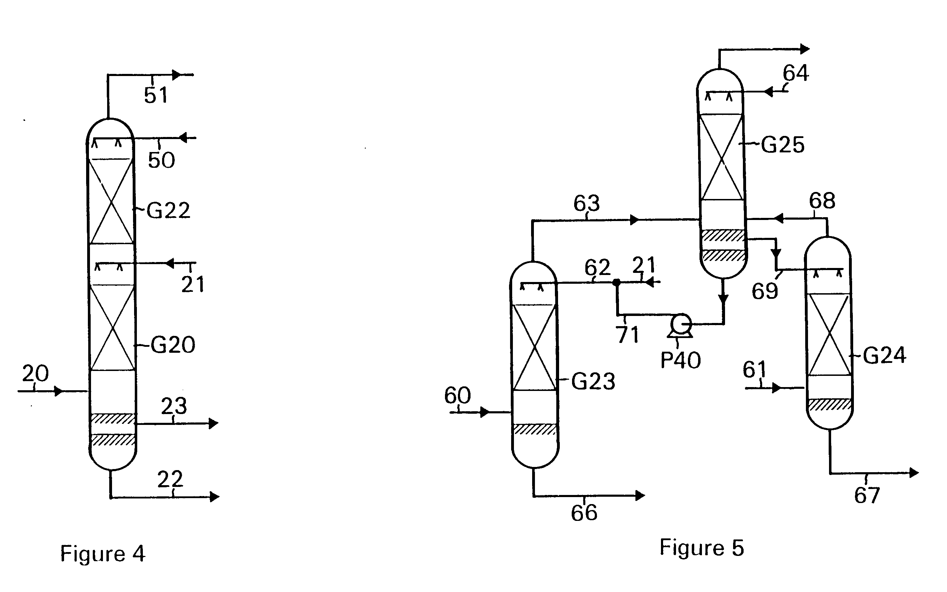

La phase hydrocarbure recueillie dans le bac de décantation B100 contient du solvant et contient également du méthane et de l'éthane. Pour la débarrasser au moins en partie du solvant ainsi que du méthane et de l'éthane qu'elle contient, il est possible de la contacter avec le gaz traité sortant de l'étape (a) selon le schéma de la Figure 4. La phase hydrocarbure est envoyée par le conduit 50 dans une zone de contact G22 dans laquelle elle est mise en contact avec le gaz traité provenant de l'étape (a).

L'entraînement par le gaz traité d'hydrocarbures légers contenus dans la phase liquide arrivant par le conduit 50 provoque un refroidissement du gaz traité. Le risque de formation d'hydrates est écarté en raison de la présence de solvant dans le gaz entrant dans la zone de contact G22. La phase gazeuse sortant de la zone de contact G22 est évacuée par le conduit 51 qui rejoint la ligne 24 et l'échangeur E20. La phase liquide sortant de la zone de contact G22 est débarrassée d'une partie du méthane et de l'éthane qu'elle contenait mais contient encore du solvant. Elle peut être alors évacuée ou comme cela est indiqué sur le schéma de la figure 4 envoyée en même temps que la phase aqueuse arrivant par le conduit 21 à la zone de contact G20.

Dans la zone de contact G20, le gaz à traiter est alors mis en contact avec deux phases liquides, une phase aqueuse provenant de l'étape (d) qui arrive par le conduit 21 et une phase hydrocarbure provenant de la zone de contact G22. Le contact avec le gaz à traiter arrivant par le conduit 20 permet d'éliminer la majeure partie du solvant contenu dans chacune de ces phases liquides. A la sortie de la zone de contact G20, la phase aqueuse et la phase hydrocarbure débarrassées de la majeure partie du solvant sont séparées par décantation. La phase aqueuse est évacuée par le conduit 22 et la phase hydrocarbure est évacuée par le conduit 23.

Dans certains cas il est possible de supprimer la zone de contact G22 en faisant arriver la phase liquide évacuée à la sortie de la zone de contact G21 par le conduit 50 directement en tête de la zone de contact G20, où elle est contactée avec le gaz traité en même temps que la phase aqueuse arrivant par le conduit 21.

Une telle solution qui a l'avantage d'être plus simple que celle qui est schématisée sur la Figure 4 présente l'inconvénient d'augmenter le risque de formation d'hydrates du fait que le refroidissement du gaz traité dû à l'entraînement d'hydrocarbures légers se produit en même temps que le transfert de solvant de la phase liquide à la phase gazeuse.

Il est également possible de réaliser le contact entre la phase aqueuse et une fraction du gaz à traiter dans une zone de contact distincte de la zone de contact dans laquelle on réalise le contact entre la phase hydrocarbure et une fraction du gaz à traiter. Dans ce cas on peut opérer par exemple selon le schéma de la figure 5.

La phase aqueuse provenant de l'étape (d) arrive par le conduit 21. Elle est contactée dans la zone de contact G23 avec une fraction de gaz à traiter qui arrive par le conduit 60. Par le conduit 66 on évacue la phase aqueuse débarrassée de la majeure partie du solvant qu'elle contenait à l'entrée de la zone de contact G23 et par le conduit 63 le gaz chargé en solvant.

La phase hydrocarbure liquide provenant du bac B100 arrive par le conduit 64. Elle est contactée dans la zone de contact G25 avec la fraction gazeuse arrivant par le conduit 63 en mélange avec la fraction gazeuse provenant de la zone de contact G24 et arrivant par le conduit 68.

L'entraînement d'hydrocarbures légers par le gaz traité provoque un refroidissement mais ce refroidissement ne risque pas d'entraîner la formation d'hydrates du fait que le gaz qui arrive par le conduit 63 est chargé en solvant. Le refroidissement ainsi opéré entraîne la condensation d'une phase aqueuse chargée en solvant. A la sortie de la zone de contact G25, les deux phases liquides sont séparées par décantation. La phase aqueuse est prélevée au moyen de la pompe P40 et envoyée par le conduit 71 pour être mélangée avec la phase aqueuse provenant de l'étape (d) et arrivant par le conduit 21.

Le mélange résultant est envoyé par le conduit 62 à la zone de contact G23.

La phase hydrocarbure prélevée à la sortie de la zone de contact G25 est envoyée par le conduit 69 à la zone de contact G24 dans laquelle elle est mise en contact avec une deuxième fraction de gaz à traiter arrivant par le conduit 61. Par le conduit 67, on évacue une phase hydrocarbure débarrassée de la majeure partie du solvant qu'elle contenait à l'entrée de la zone de contact G24 et par le conduit 68 un gaz chargé de solvant.

Le contact entre le gaz arrivant par le conduit 61 et la phase hydrocarbure liquide arrivant par le conduit 69 peut provoquer un refroidissement par vaporisation d'hydrocarbures légers contenus dans la phase hydrocarbure liquide. Un tel refroidissement entraîne la condensation d'une phase aqueuse qui dans ce cas est séparée par décantation à la sortie de la zone de contact G24 et évacuée.

La phase hydrocarbure liquide sortant de la zone de contact G25 peut être aussi débarrassée de la majeure partie de la phase solvant qu'elle contient par contact avec une partie de la phase aqueuse évacuée à la sortie de la zone de contact G20 en opérant selon un agencement similaire à celui qui est schématisé sur la Figure 3.

La phase hydrocarbure liquide évacuée par le conduit 23 (Schéma de la Figure 4) ou par le conduit 67 (Schéma de la Figure 5) contient encore du méthane et de l'éthane en faibles teneurs. Pour réduire ces teneurs résiduelles de méthane et d'éthane, on peut mettre en contact la phase hydrocarbure liquide avec une phase vapeur obtenue par rebouillage et envoyée en reflux en opérant par exemple selon le schéma de la Figure 6.

La phase hydrocarbure liquide arrivant par le conduit 80 (correspondant au conduit 23 ou 67) est mise en contact avec une phase vapeur dans la zone de contact G30A. La phase liquide sortant de la zone de contact G30A est chauffée dans la zone de rebouillage E30A, ce chauffage entraînant la production de la phase vapeur ci-dessus qui est envoyée en reflux dans la zone de contact G30A.

La phase hydrocarbure liquide sortant de la zone de rebouillage E30A est évacuée par le conduit 81.

La phase hydrocarbure vapeur sortant par le conduit 82 est envoyée à l'entrée de la zone de contact G20 (ligne 20) dans le cas du schéma de la Figure 4 et à l'entrée de la zone de contact G24 (ligne 61) dans le cas du schéma de la Figure 5.

La température en tête de la zone de rectification (étape c) détermine la proportion d'hydrocarbures autres que le méthane qui sont condensés. Lorsque l'on cherche à séparer tous les hydrocarbures formés de molécules dont le nombre d'atomes de carbone est au moins égal à 3, c'est-à-dire le propane et tous les hydrocarbures dont la masse molaire est supérieure, cette température peut être par exemple comprise entre -20 et -50 °C, pour une pression du gaz comprise entre 0.5 et 10 MPa.

Lorsque l'on cherche à séparer tous les hydrocarbures formés de molécules dont le nombre d'atomes de carbone est au moins égal à 2, c'est-à-dire l'éthane et tous les hydrocarbures dont la masse molaire est supérieure, cette température peut être, par exemple, comprise entre -40 et -100 °C, pour une pression du gaz comprise entre 0.5 et 10 MPa.

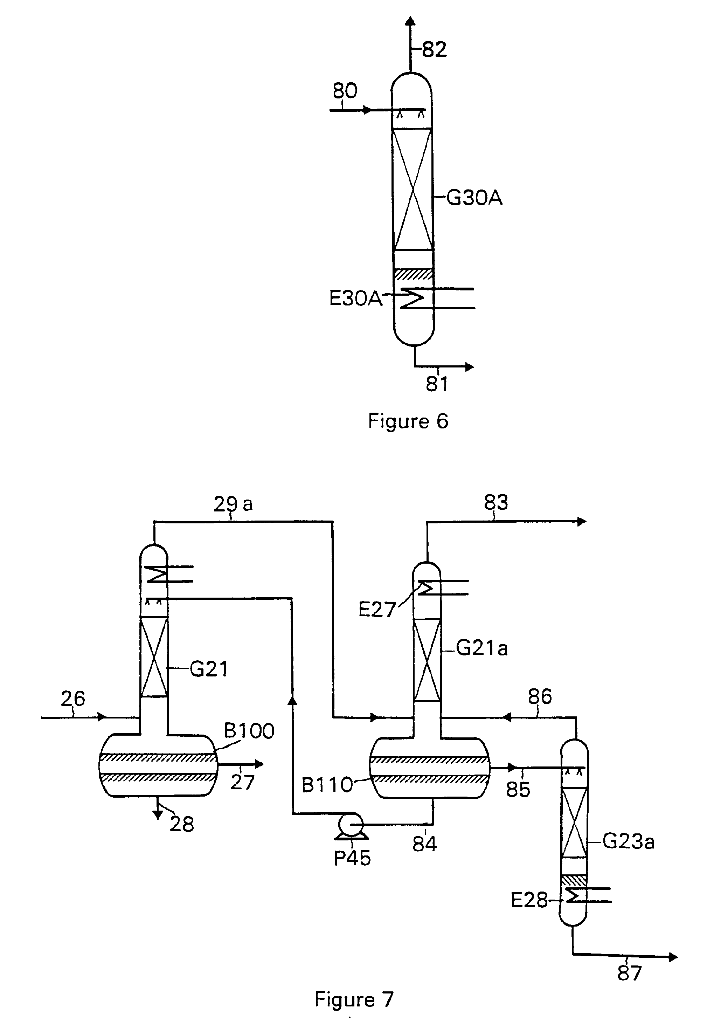

Il est également possible d'opérer en deux étapes de manière à obtenir d'une part une fraction liquide contenant essentiellement le propane et tous les hydrocarbures dont la masse molaire est supérieure et d'autre part une fraction liquide riche en éthane. On peut dans ce cas opérer par exemple selon le schéma de la Figure 7.

Le gaz sortant de la zone de contact G21 à une température comprise entre -20 et -50 °C, débarrassé de la majeure partie du propane qu'il contient, est envoyé par la ligne 29a à une zone de contact G21a dans laquelle il est contacté avec deux phases liquides, une phase hydrocarbure et une phase solvant qui sont produites par réfrigération dans la zone d'échange E27. A la sortie de la zone de contact G21a on évacue deux phases liquides qui sont séparées dans le bac de décantation B110.

La phase solvant est évacuée par le conduit 84, est reprise par la pompe P45 et renvoyée en tête de la zone de contact G21. La phase hydrocarbure est envoyée par le conduit 85 en tête de la zone de contact G23a.

En fond de la zone de contact G23a, on évacue une phase hydrocarbure liquide qui est chauffée dans la zone de rebouillage E28 de manière à produire une phase vapeur qui est envoyée dans la zone de contact G23a. La phase vapeur sortant de la zone de contact G23a est évacuée par le conduit 86 et envoyée à la zone de contact G21a.

Par le conduit 87 on évacue une phase liquide riche en éthane.

Le gaz sortant de la zone d'échange E27 par le conduit 83 à une température comprise entre -40 et -100 °C est débarrassée de la majeure partie de l'éthane contenu dans le gaz entrant dans le procédé.

Dans l'exemple d'agencement du procédé représenté sur la Figure 2, on réalise l'étape de régénération du solvant, après détente, dans une colonne de contact D100, en chauffant la base de la colonne de manière à réduire la concentration en gaz acide dans la phase solvant régénérée qui est recyclée à l'étape (e) et en refroidissant la tête de la colonne de manière à réduire la concentration en solvant du gaz acide éliminé.

Si le gaz traité contient à la fois du dioxyde de carbone et de l'hydrogène sulfuré, il peut être nécessaire d'obtenir à l'issue de l'étape de régénération du solvant, d'une part une fraction formée essentiellement de dioxyde de carbone et d'autre par une fraction gazeuse formée principalement d'hydrogène sulfuré.

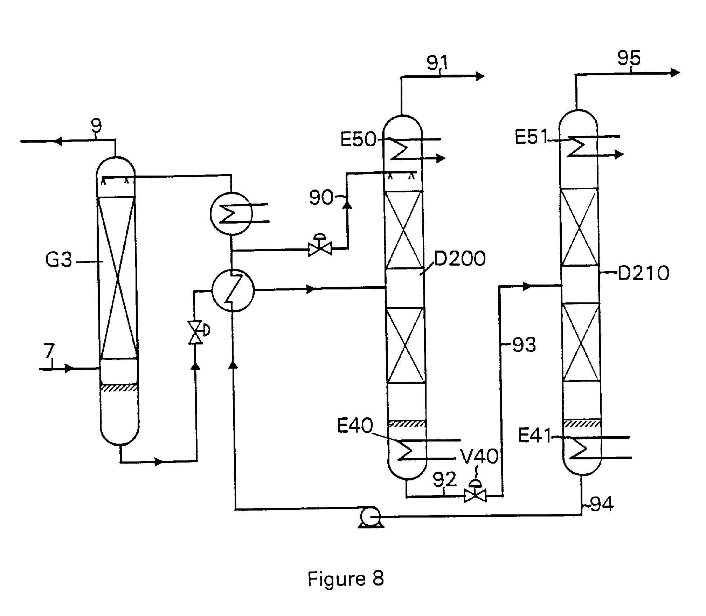

Dans ce cas l'étape de régénération du solvant peut être réalisée en opérant par exemple selon le schéma de la Figure 8.

La phase solvant évacuée à la sortie de la zone de contact G3 après une première détente est envoyée à une colonne de contact D200. La phase solvant recueillie en fond de colonne est chauffée dans la zone d'échange de chaleur E40 en produisant une phase gazeuse qui contient du dioxyde de carbone, de l'hydrogène sulfuré, et du solvant vaporisé. La phase gazeuse évacuée en tête de la colonne est refroidie dans la zone d'échange E50 de manière à condenser la majeure partie du solvant. La phase solvant liquide qui redescend dans la colonne de contact D200 permet d'absorber au moins une partie de l'hydrogène sulfuré contenu dans le gaz. Pour absorber plus complètement l'hydrogène sulfuré contenu dans le gaz, il est possible d'envoyer en tête de la colonne par le conduit 90 un appoint de solvant. Par le conduit 91, on évacue ainsi une fraction gazeuse formée essentiellement de dioxyde de carbone.

La phase solvant qui est évacuée à la base de la colonne D200 par le conduit 92 est détendue à travers la vanne de détente V40 et envoyée par le conduit 93 à la colonne de contact D210. La phase solvant recueillie en fond de colonne est chauffée dans la zone d'échange de chaleur E41 en produisant une phase solvant régénérée, qui est évacuée par le conduit 94 et recyclée à la zone de contact G3, et une phase gazeuse formée principalement d'hydrogène sulfuré. La phase gazeuse évacuée en tête de colonne est refoidie dans la zone d'échange E51 de manière à condenser la majeure partie du solvant. Par le conduit 95, on évacue ainsi une fraction gazeuse formée principalement d'hydrogène sulfuré.

Le gaz sortant de l'étape de désacidification (e) est relativement froid. Il est possible de réaliser au moins une partie de la réfrigération nécessaire au cours de l'étape (b) par échange thermique entre le gaz provenant de l'étape (a) et le gaz provenant de l'étape (e).

Le complément de réfrigération nécessaire peut être fourni par différentes méthodes. Il peut être fourni par exemple par une machine frigorifique à compression à un ou deux étages. Il peut être également obtenu par détente du gaz traité dans une turbine.

Le complément de réfrigération nécessaire peut être fourni au cours de plusieurs échanges thermiques et une partie au moins de ce complément de réfrigération peut être également fourni par une machine frigorifique à absorption ou par un cycle frigorifique dans lequel le fluide frigorifique est comprimé au moyen d'un éjecteur gaz-gaz.

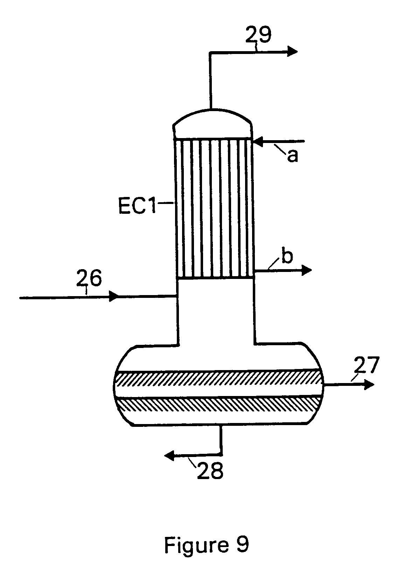

Pour la rectification effectuée dans la zone de contact G21, le contact entre les deux phases liquides descendantes et la phase vapeur montante d'une part, et le refroidissement (échangeur E22) d'autre part, peuvent être réalisés dans un même appareil constitué d'un échangeur-contacteur, comme indiqué sur la figure 9.

L'échangeur-contacteur EC1 est constitué de plusieurs canaux verticaux dans lequels peut s'établir un trafic liquide et vapeur, le ou les liquides s'écoulant vers le bas et le gaz vers le haut ; ces canaux sont refroidis par échange de chaleur indirect avec un fluide de réfrigération externe entrant dans l'échangeur-contacteur EC1 par le conduit a et ressortant par le conduit b. Ainsi, lorsque la phase gazeuse du mélange à rectifier entrant par le conduit 26 circule dans les canaux vers le haut, une partie se condense sur les parois et constitue un reflux liquide qui redescend ce reflux est formé de deux phases liquides, l'une est constituée essentiellement d'hydrocarbures, et l'autre est une phase aqueuse de solvant. Ce mode de contact et de réfrigération simultané présente plusieurs avantages : sur le plan de la compacité, l'intégration des deux fonctions dans un seul appareil permet de réduire la taille des équipements ; par ailleurs, la séparation est beaucoup plus efficace que dans le cas où les deux fonctions sont séparées ; par exemple, dans le cas de la séparation des constituants du gaz naturel, ce système permet couramment une récupération de plus de 95 % des hydrocarbures contenant au moins 3 atomes de carbone.

Ce type d'échangeur-contacteur peut être par exemple un échangeur à plaque en aluminium brasé, ou un échangeur du type tube-calandre, auquel cas le mélange à séparer circule dans les tubes, et le fluide de réfrigération dans la calandre. Dans tous les cas, l'échangeur-contacteur est conçu et placé de telle manière que les canaux de circulation du mélange à rectifier soient verticaux de manière à permettre l'écoulement par gravité du liquide formé le long des parois par condensation ; en outre, ces canaux peuvent être munis de garnissages internes destinés à accroître l'efficacité de la séparation et du transfert de chaleur.

Ce mode de contact et d'échange thermique simultané dans un échangeur-contacteur peut aussi être mis en oeuvre sur la zone de contact G21a et l'échangeur E27 (Figure 7) et également pour réaliser les étapes (a) et (b) et/ou (b) et (c).

Le procédé selon l'invention peut être illustré par l'exemple suivant :

### Exemple:

Dans cet exemple, on procède selon le schéma de la Figure 2. Un gaz naturel, saturé en eau, entre dans le procédé selon l'invention par le conduit 20 ; sa température est de 40 °C , sa pression de 3 MPa, son débit est de 100 T/h ; il contient 38 % de méthane, 29,2 % d'éthane, 17,5 % de propane, 11 % de butane, 3,1 % de CO₂ et 1,2 % d'H₂S (les pourcentages sont massiques). Le gaz entre dans le contacteur G20, dans lequel il est mis en contact à contre-courant avec une solution aqueuse de méthanol provenant du conduit 21 dont le débit est de 279 Kg/h et qui contient 42 % en poids de méthanol ; dans le contacteur G20, le gaz se charge en méthanol, si bien que la phase liquide qui est séparée en fond de ce contacteur et qui est évacuée par le conduit 22 contient de l'eau avec 1 % en poids de méthanol ; son débit est de 180 Kg/h. Le gaz chargé en méthanol sort du contacteur G20 par le conduit 24, il est refroidi jusqu'à une température de 5 °C dans l'échangeur E21, ce qui provoque sa condensation partielle, et il entre par le conduit 26 dans la zone de contact G21 ; il est refroidi dans l'échangeur E22 à l'aide d'un réfrigérant extérieur, jusqu'à une température de -50 °C. Il se produit une condensation partielle et les deux phases liquides qui en résultent, l'une constituée essentiellement d'hydrocarbures et l'autre d'un mélange d'eau et de méthanol, refluent vers la partie inférieure de la zone de contact G21 dans le ballon B100, dans lequel les deux phases liquides (y compris le condensat formé dans E21) sont séparées. La phase aqueuse de méthanol est extraite par le conduit 28, pompée par la pompe P20 et renvoyée par le conduit 21 dans la zone de contact G20. La phase hydrocarbure sort du ballon B100 par le conduit 27 et constitue un des produits du procédé : son débit est de 44,6 T/h ; par rappport au gaz brut entrant par le conduit 20, la phase liquide hydrocarbure sortant par le conduit 27 correspond à 7,5 % du méthane, 41,8 % de l'éthane, 99,7% du propane, 100 % du butane.

Le gaz dégazoliné sortant par le conduit 29 entre dans la zone de contact G200 dans laquelle il est mis en contact à contre-courant avec une phase aqueuse de méthanol entrant par le conduit 30 ; cette phase solvant a un débit de 49,6 T/h avec une concentration massique de méthanol de 64 % , sa température est de -50 °C. En tête de la zone de contact G200, le gaz sort par le conduit 31 : son débit est de 53,3 T/h et sa teneur en H₂S est de 3 ppm. La phase liquide sortant par le conduit 37 est détendue jusqu'à une pression de 1 MPa dans la vanne V22 de façon à déméthaniser la phase solvant ; le gaz et le liquide sont séparés dans le ballon B120 ; le gaz formé constitué principalement de méthane sort du ballon B120 par le conduit 39 et il est renvoyé par le compression K1 vers la zone de contact G200. La phase liquide sort du ballon B120 par le conduit 38, se réchauffe dans l'échangeur E24 et entre dans la zone de régénération du solvant D100 après détente par la vanne V20 ; dans cette zone, le phase solvant est rectifiée ; la tête de la zone D100 est refroidie à 0 °C tandis que le fond est chauffé à 140 °C ; le gaz sortant en tête par le conduit 33 a un débit de 1,9 T/h ; il contient (% poids) 35,8 % d'H₂S et 34,4 % de CO₂. La phase solvant régénérée sort de la zone D100 par le conduit 35, et elle est envoyée par la pompe P21 et par le conduit 32 vers l'échangeur E24 dans laquelle elle est prérefroidie par échange avec la phase solvant sortant du ballon B120, puis refroidie à nouveau dans l'échangeur E25 par un fluide réfrigérant externe jusqu'à une température de -50 °C, et elle entre par le conduit 30 dans la zone de contact G200 ; compte-tenu des pertes de méthanol par entraînement en phase vapeur dans le conduit 33, il est nécessaire d'introduire un appoint de 5 Kg/h de méthanol par le conduit 34.

## Revendications

1. Procédé de traitement d'un gaz contenant du méthane, de l'eau, au moins un hydrocarbure autre que le méthane et au moins un gaz acide dans le but de débarrasser au moins en partie le gaz de l'eau, des hydrocarbures autres que le méthane et du gaz acide, comprenant les étapes suivantes :
a) On contacte ledit gaz avec une phase liquide recyclée renfermant à la fois de l'eau et un solvant, ledit solvant étant un composé organique non-hydrocarbure, normalement liquide, autre que l'eau, ledit composé étant au moins partiellement miscible à l'eau et distillable à une température inférieure à celle de distillation de l'eau, de manière à obtenir une phase liquide aqueuse appauvrie en solvant, par comparaison avec ladite phase liquide recyclée, et une phase gazeuse chargée de solvant,
b) On refroidit la phase gazeuse provenant de l'étape (a), de manière à la condenser partiellement, le condensat obtenu comprenant une phase aqueuse et une phase d'hydrocarbure, et on sépare le condensat du gaz non condensé,
et caractérisé par les étapes suivantes:
c) On rectifie le gaz non-condensé en le faisant circuler dans une direction ascendante et en le refroidissant pour le condenser partiellement, en faisant s'écouler le liquide condensé résultant dans une direction descendante en contact à contre-courant avec le gaz ascendant et en recueillant après ledit contact une phase gazeuse non-condensée et un mélange dudit liquide condensé avec le condensat de l'étape (b), ledit mélange comprenant une phase liquide aqueuse et une phase liquide d'hydrocarbure,
d) On sépare par décantation la phase liquide aqueuse de la phase liquide d'hydrocarbure, obtenues à l'étape (c), on soutire la phase d'hydrocarbure et on recycle la phase aqueuse à l'étape (a),
e) On contacte la phase gazeuse non-condensée, provenant de l'étape (c), avec une phase solvant régénérée provenant de l'étape (f), de manière à dissoudre dans ladite phase solvant au moins une partie du gaz acide présent dans ladite phase gazeuse non-condensée, et on recueille une phase gazeuse désacidifiée et une phase solvant chargée en gaz acide,
(f) On libère par détente et/ou chauffage au moins une partie du gaz acide de la phase solvant recueillie à l'étape (e) et on renvoie la phase solvant régénérée résultante à l'étape (e).

2. Procédé selon la revendication 1 caractérisé en ce que la phase liquide d'hydrocarbure provenant de l'étape (d) est contactée avec la phase gazeuse provenant de l'étape (a), de manière à la débarrasser au moins en partie du méthane et de l'éthane qu'elle contient.

3. Procédé selon l'une des revendications 1 à 2, caractérisé en ce que la phase liquide d'hydrocarbure provenant de l'étape (d) est contactée avec le gaz traité au cours de l'étape (a) de manière à obtenir une phase liquide d'hydrocarbure débarrassée au moins en partie du solvant qu'elle contenait.

4. Procédé selon l'une des revendications 1 à 3, caractérisé en ce que la phase liquide d'hydrocarbure provenant de l'étape (d) est envoyée à une zone de rebouillage dans laquelle elle est contactée avec une phase vapeur opérant en reflux, obtenue par chauffage et vaporisation partielle de la phase liquide d'hydrocarbure évacuée de la zone de rebouillage, et en ce que la phase vapeur provenant de la zone de rebouillage est remélangée avec le gaz traité à l'étape (c).

5. Procédé selon l'une des revendications 1 à 4, caractérisé en ce que la phase liquide d'hydrocarbure provenant de l'étape (d) est contactée avec une phase aqueuse provenant de l'étape (a) de manière à obtenir une phase liquide d'hydrocarbure débarrassée au moins en partie du solvant qu'elle contenait et une phase aqueuse chargée de solvant et en ce que ladite phase aqueuse chargée de solvant est recyclée à l'entrée de l'étape (a).

6. Procédé selon l'une des revendications 1 à 5, caractérisé en ce que la phase liquide recyclée à l'étape (a) contient de 20 à 60 % en poids de solvant.

7. Procédé selon l'une des revendications 1 à 6, caractérisé en ce que la phase solvant envoyée à l'étape (e) contient de 5 à 50 % en poids d'eau.

8. Procédé selon l'une des revendications 1 à 7, caractérisé en ce que, à l'issue de l'étape de régénération (f), on prélève sur la phase solvant régénérée un courant de purge de manière à maintenir sensiblement constantes les quantités de solvant et d'eau présentes dans l'ensemble du circuit permettant de réaliser les étapes (e) et (f).

9. Procédé selon l'une des revendications 1 à 8, caractérisé en ce que le solvant est le méthanol.

10. Procédé selon l'une des revendications 1 à 8, caractérisé en ce que le solvant est choisi parmi les solvants suivants :
méthylpropyléther, éthylpropyléther, dipropyléther, méthyltertiobutyléther, dimethoxyméthane, diméthoxyéthane, éthanol, méthoxyéthanol, propanol.

11. Procédé selon l'une des revendications 1 à 10 caractérisé en ce que la température de la phase gazeuse, à l'issue de l'étape (c), est comprise entre -20 et - 50 °C, le gaz obtenu à l'issue de l'étape (c) étant débarrassé de la majeure partie du propane qu'il contenait à l'entrée du procédé.

12. Procédé selon l'une des revendication 1 à 10 caractérisé en ce que la température de la phase gazeuse, à l'issue de l'étape (c), est comprise entre -40 et -100 °C, le gaz obtenu à l'issue de l'étape (c) étant débarrassé de la majeure partie de l'éthane qu'il contenait à l'entrée du procédé.

13. Procédé selon l'une des revendications 1 à 12, caractérisé en ce que l'on réalise l'étape (e) à une température moyenne au plus égale à la température moyenne de l'étape (c), l'écart entre la température moyenne de l'étape (e) et la température moyenne de l'étape (c) étant au plus égal à 20 °C.

14. Procédé selon l'une des revendications 1 à 13, caractérisé en ce que l'on réalise au moins une partie de la réfrigération nécessaire à l'étape (b) par échange thermique indirect entre le gaz provenant de l'étape (a) et le gaz provenant de l'étape (e).

15. Procédé selon l'une des revendications 1 à 14, caractérisé en ce que, la régénération du solvant qui est opérée au cours de l'étape (f) est réalisée, après détente, dans une colonne de contact, en chauffant la base de la colonne de manière à réduire la concentration en gaz acide dans la phase solvant régénérée qui est recyclée à l'étape (e) et en refroidissant la tête de la colonne de manière à réduire la concentration en solvant des gaz acides éliminés.

16. Procédé selon l'une des revendications 1 à 14, caractérisé en ce que, le gaz traité contient du dioxyde de carbone et de l'hydrogène sulfuré et en ce que la régénération du solvant qui est opérée au cours de l'étape (f) est réalisée, après détente, dans une première colonne de contact, en chauffant la base de ladite première colonne de contact et en envoyant en tête de ladite première colonne de contact une fraction liquide de solvant de manière à absorber au moins en partie l'hydrogène sulfuré contenu dans la phase gazeuse produite par détente et chauffage, en évacuant de ladite première colonne de contact une fraction gazeuse formée principalement de dioxyde de carbone et en envoyant, après une nouvelle détente, la phase solvant recueillie à la base de ladite première colonne de contact dans une deuxième colonne de contact, en chauffant la base de ladite deuxième colonne de contact, en évacuant en tête de ladite deuxième colonne de contact une phase gazeuse formée principalement d'hydrogène sulfuré et en prélevant à la base de ladite deuxième colonne de contact une phase solvant régénérée qui est recyclée à l'étape (e).

17. Procédé selon l'une des revendications 1 à 16, caractérisé en ce que les étapes (a) et (b) et/ou et (c) sont réalisées dans un même appareil permettant de réaliser simultanément les opérations de contact entre phase gazeuse et phase liquide ainsi que d'échange de chaleur.

## Claims

1. Process for the treatment of a gas containing methane, water, at least one hydrocarbon other than methane and at least one acid gas with a view to at least partly removing the water, hydrocarbons other than methane and acid gas, comprising the following stages :
a) said gas is contacted with a recycled liquid phase containing both water and a solvent, said solvent being a normally liquid, non-hydrocarbon, organic compound, other than water, said compound being at least partly miscible with water and distillable at a temperature below that of the distillation of water, so as to obtain a solvent-depleted, aqueous liquid phase, by comparison with said recycled liquid phase, and a solvent-containing gaseous phase;
b) the gaseous phase from stage (a) is cooled, so as to partly condense it, the condensate obtained containing an aqueous phase and a hydrocarbon phase and the condensate is separated from the non-condensed gas;
and characterized by the following stages :
c) the non-condensed gas is rectified by making it circulate in a rising direction and by cooling it in order to bring about its partial condensation, by making the resulting condensed liquid flow in a downward direction in counter-current contact with the rising gas and by collecting after said contact a non-condensed gaseous phase and a mixture of said condensed liquid with the condensate of stage (b), said mixture incorporating an aqueous liquid phase and a liquid hydrocarbon phase;
d) the aqueous liquid phase is separated by decanting from the liquid hydrocarbon phase obtained in stage (c), the hydrocarbon phase is drawn off and the aqueous phase recycled to stage (a);
e) the non-condensed gaseous phase from stage (c) is contacted with a regenerated solvent phase from stage (f), so as to dissolve in said solvent phase at least part of the acid gas present in said non-condensed gaseous phase and a deacidified gaseous phase and an acid gas-containing solvent phase are collected;
f) by expansion and/or heating at least part of the acid gas is freed from the solvent phase collected in stage (e) and the resultant regenerated solvent phase is returned to stage (e).

2. Process according to claim 1, characterized in that the liquid hydrocarbon phase from stage (d) is contacted with the gaseous phase from stage (a), so as to at least partly remove therefrom the methane and ethane contained therein.

3. Process according to one of the claims 1 to 2, characterized in that the liquid hydrocarbon phase from stage (d) is contacted with the gas treated during stage (a), so as to obtain a liquid hydrocarbon phase from which at least part of the solvent contained therein is removed.

4. Process according to one of the claims 1 to 3, characterized in that the liquid hydrocarbon phase from stage (d) is supplied to a reboiling sone, where it is contacted with a vapour phase under reflux conditions obtained by heating and partial vaporization of the liquid hydrocarbon phase discharged from the reboiling zone and in that the vapour phase from the reboiling sone is remixed with the gas treated in stage (c).

5. Process according to one of the claims 1 to 4, characterized in that the liquid hydrocarbon phase from stage (d) is contacted with an aqueous phase from stage (a), so as to obtain a liquid hydrocarbon phase from which has been removed at least part of the solvent which it contained and a solvent-containing aqueous phase and in that the solvent-containing aqueous phase is recycled to the intake of stage (a).

6. Process according to one of the claims 1 to 5, characterized in that the liquid phase recycled to stage (a) contains 20 to 60% by weight of solvent.

7. Process according to one of the claims 1 to 6, characterized in that the solvent phase supplied to stage (e) contains 5 to 50% by weight of water.

8. Process according to one of the claims 1 to 7, characterized in that, on leaving the regeneration stage (f), a purge flow is removed from the regenerated solvent phase, so as to maintain substantially constant the solvent and water quantities present in the complete circuit making it possible to perform stages (e) and (f).

9. Process according to one of the claims 1 to 8, characterized in that the solvent is methanol.

10. Process according to one of the claims 1 to 8, characterized in that the solvent is chosen from among methyl propyl ether, ethyl propyl ether, dipropyl ether, methyl tert butyl ether, dimethoxy methane, dimethoxy ethane, ethanol, methoxy ethanol and propanol.

11. Process according to one of the claims 1 to 10, characterized in that the temperature of the gaseous phase on leaving stage (c) is between -20 and -50°C, the gas obtained on leaving stage (c) being freed from most of the propane which it contained on entering the process.

12. Process according to one of the claims 1 to 10, characterized in that the temperature of the gaseous phase on leaving stage (c) is between -40 and -100°C, the gas obtained at the end of stage (c) being freed from most of the ethane which it contained on entering the process.

13. Process according to one of the claims 1 to 12, characterized in that stage (e) is performed at a mean temperature at the most equal to the mean temperature of stage (c), the variation between the mean temperature of stage (e) and the mean temperature of stage (c) being at the most equal to 20°C.

14. Process according to one of the claims 1 to 13, characterized in that at least part of the cooling necessary for stage (b) is performed by indirect heat exchange between the gas from stage (a) and the gas from stage (e).

15. Process according to one of the claims 1 to 14, characterized in that the regeneration of the solvent during stage (f) is carried out after expansion, in a contact column, by heating the bottom of the column in such a way as to reduce the acid gas concentration in the regenerated solvent phase, which is recycled to stage (e) and by cooling the top of the column, so as to reduce the solvent concentration of the eliminated acid gases.

16. Process according to one of the claims 1 to 14, characterized in that the treated gas contains carbon dioxide and hydrogen sulphide and that the regeneration of the solvent during stage (f) is performed, after expansion, in a first contact column by heating the bottom of the said first contact column and by supplying to the top of said first contact column a liquid solvent fraction, so as to at least partly absorb the hydrogen sulphide contained in the gaseous phase produced by expansion and heating, by discharging from said first contact column a gaseous fraction mainly formed by carbon dioxide and by supplying, following a further expansion, the solvent phase collected at the bottom of said first contact column to a second contact column, by heating the bottom of said second contact column, by discharging at the top of said second contact column a gaseous phase formed mainly by hydrogen sulphide and by removing from the bottom of said second contact column a regenerated solvent phase, which is recycled to stage (e).

17. Process according to one of the claims 1 to 16, characterized in that stages (a) and (b) and/or (b) and (c) are performed in the same apparatus making it possible to simultaneously perform the contact operations between the gaseous phase and the liquid phase, as well as the heat exchange.

## Patentansprüche

1. Verfahren zur Behandlung eines Gases, das Methan, Wasser, wenigstens einen von Methan verschiedenen Kohlenwasserstoff und mindestens ein Sauergas umfaßt, um das Gas wenigstens zum Teil von dem Wasser, den von Methan verschiedenen Kohlenwasserstoffen und dem Sauergas zu befreien, mit den folgenden Schritten:
(a) Man bringt dieses Gas mit einer zurückgeführten Flüssigphase in Kontakt, die zugleich Wasser und ein Lösungsmittel enthält, wobei dieses Lösungsmittel eine organische, nichtkohlenwasserstoffhaltige, üblicherweise flüssige, von Wasser verschiedene Zusammensetzung ist, welche wenigstens teilweise mit Wasser mischbar und mit einer Temperatur unter derjenigen zur Destillation von Wasser destillierbar ist, derart, um eine wässerige, im Vergleich mit dieser zurückgeführten Flüssigphase an Lösungsmittel arme Flüssigphase und eine mit Lösungsmittel beladene Gasphase zu erhalten,
(b) man kühlt die von dem Schritt (a) herrührende Gasphase ab, derart, um sie teilweise zu kondensieren, wobei das erhaltene Kondensat eine wässerige Phase und eine Kohlenwasserstoffphase umfaßt, und man trennt das Kondensat vom nicht-kondensierten Gas ab,
und gekennzeichnet durch die folgenden Schritte:
(c) Man rektifiziert das nicht-kondensierte Gas, indem es in einer aufwärts gerichteten Richtung umgewälzt und abgekühlt wird, um es teilweise zu kondensieren, indem die kondensierte Flüssigkeit in einer abwärts gerichteten Richtung im Kontakt zu einem Gegenstrom mit dem aufsteigenden Gas geführt wird und indem nach diesem Kontakt eine nicht-kondensierte Gasphase und ein Gemisch dieser kondensierten Flüssigkeit mit dem Kondensat des Schrittes (b) abgekühlt werden, wobei dieses Gemisch eine wässerige Flüssigphase und eine Kohlenwasserstoffflüssigphase umfaßt,
(d) man trennt die wässerige Flüssigphase von der Kohlenwasserstoffflüssigphase, die aus dem Schritt (c) erhalten sind, durch Dekantieren, man zieht die Kohlenwasserstoffphase ab und man führt die wässerige Phase zu dem Schritt (a) zurück,
(e) man bringt die nicht-kondensierte, von dem Schritt (c) herrührende Gasphase mit einer regenerierten, von dem Schritt (f) herrührenden Lösungsmittelphase in Kontakt, derart, um in dieser Lösungsmittelphase wenigstens einen Teil des in der nicht-kondensierten Gasphase vorliegenden Sauergases zu lösen, und man fängt eine entsäuerte Gasphase und eine an Sauergas angereicherte Phase auf,
(f) man befreit einen Teil des Sauergases von der in Schritt (e) aufgefangenen Lösungsmittelphase durch Druckminderung und/oder Erwärmung und man führt die regenerierte, von Schritt (e) herrührende Lösungsmittelphase zurück.

2. Verfahren nach Anspruch 1, dadurch gekennzeichnet, daß die von dem Schritt (d) herrührende Kohlenwasserstoffflüssigphase mit der von dem Schritt (a) herrührenden Gasphase in Kontakt gebracht wird, derart, um sie wenigstens zum Teil von dem Methan und dem Ethan, das sie enthält, zu befreien.

3. Verfahren nach einem der Ansprüche 1 bis 2, dadurch gekennzeichnet, daß die von dem Schritt (d) herrührende Kohlenwasserstoffflüssigphase mit dem im Laufe des Schrittes (a) behandelten Gas in Kontakt gebracht wird, derart, um eine Kohlenwasserstoffflüssigphase zu erhalten, die wenigstens zum Teil von Lösungsmittel, welches sie enthält, befreit ist.

4. Verfahren nach einem der Ansprüche 1 bis 3, dadurch gekennzeichnet, daß die von dem Schritt (d) herrührende Kohlenwasserstoffflüssigphase in eine Abkochzone verbracht wird, in welcher sie mit einer in Rückstrom betriebenen Dampfphase in Kontakt gebracht wird, die durch Erwärmung und Teilverdampfung der aus der Abkochzone evakuierten Kohlenwasserstoffflüssigphase erhalten ist, und daß die von der Abkochzone herrührende Dampfphase mit dem in dem Schritt (c) behandelten Gas rückvermischt wird.

5. Verfahren nach einem der Ansprüche 1 bis 4, dadurch gekennzeichnet, daß die von dem Schritt (d) herrührende Kohlenwasserstoffflüssigphase mit einer wässerigen, von dem Schritt (a) herrührenden Phase in Kontakt gebracht wird, derart, um eine Kohlenwasserstoffflüssigphase, welche wenigstens zum Teil von Lösungsmittel, das sie enthält, befreit ist, und eine wässerige Phase, welche mit Lösungsmittel beladen ist, zu erhalten, und daß die wässerige, mit Lösungsmittel beladene Phase an den Einlaß des Schrittes (a) zurückgeführt wird.

6. Verfahren nach einem der Ansprüche 1 bis 5, dadurch gekennzeichnet, daß die zu dem Schritt (a) zurückgeführte Flüssigphase 20 bis 60 Gew.-% an Lösungsmittel enthält.

7. Verfahren nach einem der Ansprüche 1 bis 6, dadurch gekennzeichnet, daß die zu dem Schritt (e) verbrachte Lösungsmittelphase 5 bis 50 Gew.-% an Wasser enthält.

8. Verfahren nach einem der Ansprüche 1 bis 7, dadurch gekennzeichnet, daß man an dem Auslaß des Regenerierungsschrittes (f) von der regenerierten Lösungsmittelphase einen Entleerungsfluß abzieht, derart, um die in der Kreislaufgesamtheit enthaltenen Mengen an Lösungsmittel und an Wasser, welche die Schritte (e) und (f) verwirklichen, deutlich konstant zu halten.

9. Verfahren nach einem der Ansprüche 1 bis 8, dadurch gekennzeichnet, daß das Lösungsmittel Methanol ist.

10. Verfahren nach einem der Ansprüche 1 bis 9, dadurch gekennzeichnet, daß das Lösungsmittel unter den folgenden Lösungsmitteln ausgewählt ist:
Methylpropylether, Ethylpropylether, Dipropylether, Methyltertiobutylether, Dimethoxymethan, Dimethoxyethan, Ethanol, Methoxyethanol, Propanol.

11. Verfahren nach einem der Ansprüche 1 bis 10, dadurch gekennzeichnet, daß die Temperatur der Gasphase an dem Auslaß des Schrittes (c) zwischen -20 und -50 °C einschließlich liegt, wobei das an dem Ausgang des Schrittes (c) erhaltene Gas von dem größeren Teil des Propans, das es zu Beginn des Verfahrens enthielt, befreit ist.

12. Verfahren nach einem der Ansprüche 1 bis 10, dadurch gekennzeichnet, daß die Temperatur der Gasphase an dem Auslaß des Schrittes (c) zwischen -40 und -100 °C einschließlich liegt, wobei das an dem Ausgang des Schrittes (c) erhaltene Gas von dem größeren Teil des Ethans, das es zu Beginn des Verfahrens enthielt, befreit ist.

13. Verfahren nach einem der Ansprüche 1 bis 12, dadurch gekennzeichnet, daß man den Schritt (e) bei einer mittleren Temperatur höchstens gleich zu der mittleren Temperatur des Schrittes (c) durchführt, wobei der Unterschied zwischen der mittleren Temperatur des Schrittes (e) und der mittleren Temperatur des Schrittes (c) höchstens gleich 20 °C beträgt.

14. Verfahren nach einem der Ansprüche 1 bis 13, dadurch gekennzeichnet, daß man wenigstens einen Teil der notwendigen Kälteerzeugung in dem Schritt (b) durch mittelbaren Wärmeaustausch zwischen dem Schritt (a) und dem von dem Schritt (e) herrührenden Gas vornimmt.

15. Verfahren nach einem der Ansprüche 1 bis 14, dadurch gekennzeichnet, daß die Regenerierung des Lösungsmittels, die im Laufe des Schrittes (f) betrieben wird, nach einer Druckminderung in einer Kontaktkolonne durch Erwärmen des Kolonnensokkels, derart, um die Konzentration an Sauergas in der regenerierten Lösungsmittelphase herabzusetzen, welche in den Schritt (e) zurückgeführt wird, und durch Kühlen des Kolonnenkopfes, derart, um die Konzentration an Lösungsmittel der ausgeschiedenen Sauergase zu vermindern, durchgeführt wird.

16. Verfahren nach einem der Ansprüche 1 bis 14, dadurch gekennzeichnet, daß das behandelte Gas Kohlendioxid und sulfidischen Wasserstoff enthält und daß die Regenerierung des Lösungsmittels, die im Laufe des Schrittes (f) vorgenommen wird, nach einer Druckminderung in einer ersten Kontaktkolonne durch Erwärmen des Sockels dieser ersten Kontaktkolonne und durch Einleiten einer Flüssigfraktion von Lösungsmittel am Kopf dieser ersten Kontaktkolonne, derart, um wenigstens einen Teil des in der durch Druckminderung und Erwärmung erzeugten Gasphase enthaltenen sulfidischen Wasserstoffs zu absorbieren, durch Evakuieren einer im wesentlichen von Kohlendioxid gebildeten Gasfraktion aus dieser ersten Kontaktkolonne und nach einer erneuten Druckminderung durch Einleiten der an dem Sokkel dieser ersten Kontaktkolonne aufgefangenen Lösungsmittelphase in eine zweite Kontaktkolonne, durch Erwärmen des Sokkels dieser zweiten Kontaktkolonne, durch Evakuieren einer im wesentlichen aus sulfidischem Wasserstoff gebildeten Gasphase am Kopf dieser zweiten Kontaktkolonne und durch Abziehen einer regenerierten- Lösungsmittelphase, welche zu dem Schritt (e) zurückgeführt wird, am Sockel dieser zweiten Kontaktkolonne durchgeführt wird.

17. Verfahren nach einem der Ansprüche 1 bis 16, dadurch gekennzeichnet, daß die Schritte (a) und (b) und/oder (b) und (c) in der gleichen Vorrichtung durchgeführt werden, welche gleichzeitig die Kontaktvorgänge zwischen Gasphase und Flüssigphase sowie den Wärmeaustausch zu realisieren gestattet.
